# EUROPÄISCHE PATENTSCHRIFT

(11) **EP 3 882 478 B1**
(45) Veröffentlichungstag und Bekanntmachung des Hinweises auf die Patenterteilung: **07.02.2024**
(21) Anmeldenummer: 20212341.0
(22) Anmeldetag: 08.12.2020
(51) Int. Cl.: F16D 3/10, F16D 3/72, F16D 3/56, F16H 3/089, F16H 61/04, A01D 69/06

(54) **ANTRIEBSSTRANG MIT EINER BEWEGLICHEN KUPPLUNG ZWISCHEN EINER MOTORWELLE UND EINER EINGANGSWELLE EINES SCHALTGETRIEBES**
DRIVE TRAIN WITH A YIELDABLE COUPLING BETWEEN A MOTOR SHAFT AND AN INPUT SHAFT OF A SHIFT GEARBOX
CHAINE CINÉMATIQUE AVEC UN ACCOUPLEMENT EXTENSIBLE ENTRE UN ARBRE MOTEUR ET UN ARBRE D'ENTRÉE D'UNE BOÎTE DE VITESSES

(30) Priorität: 18.03.2020 DE 102020107426
(43) Veröffentlichungstag der Anmeldung: 22.09.2021
(73) Patentinhaber: CLAAS Industrietechnik GmbH, 33106 Paderborn (DE)
(72) Erfinder: Bleischwitz, Stephan, 33178 Borchen (DE); Loeneke, Markus, 33142 Büren (DE); Knoop, Patrick, 33154 Salzkotten (DE); Behra, Jan-Philipp, 33332 Gütersloh (DE)
(74) Vertreter: CLAAS Gruppe

(56) Entgegenhaltungen:
- DE-A1- 3 447 652
- DE-A1-102009 013 367
- DE-A1-102016 124 920
- GB-A- 380 999
- JP-A- 2012 219 852
- US-A- 2 776 583
- US-A- 2 952 143
- US-A- 4 679 679
- US-A1- 2010 303 537

## Beschreibung

Die vorliegende Erfindung betrifft einen Antriebsstrang gemäß dem Oberbegriff des Anspruches 1. Weiterhin betrifft die Erfindung ein Fahrzeug, insbesondere ein landwirtschaftliches oder kommunales Nutzfahrzeug, mit einem Antriebsstrang.

Ein Antriebsstrang der eingangs genannten Art ist aus der JP 2012 219 852 A bekannt, wobei das Verbindungsteil einer Antriebswelle einer Schaltgetriebeanordnung in einer als Hohlwelle ausgebildete Motorabtriebswelle eingreift, wobei zur Drehmomentübertragung Vorsprünge des Verbindungsteils der Antriebswelle in Nuten der Motorabtriebswelle eingreifen, wobei gummielastische Zwischenglieder zwischen Radialflächen der Vorsprünge und Nuten angeordnet sind.

Ein weiterer Antriebsstrang ist aus der DE 1 085 042 A1 bekannt
Der aus der DE 1 085 042 A1 bekannte Antriebsstrang weist ein mehrstufiges Stirnradgetriebe auf, mit einer treibenden Welle, auf der lose drehende Zahnräder sowie ein axial verschiebliches Schieberad angeordnet sind, und einer Vorgelegewelle, auf der ein lose drehendes Zahnrad sowie ein axial verschiebliches Zahnrad angeordnet sind. Das Schieberad sowie das axial verschiebliche Zahnrad weisen eine Innenverzahnung auf, mittels der diese auf der treibenden Welle bzw. der Vorgelegewelle durch eine Führungsverzahnung eines Führungsabschnitts kraftschlüssig in Eingriff stehen. Das Schieberad sowie das axial verschiebliche Zahnrad weisen auf zumindest einer Seite eine Schaltverzahnung in Form von Klauen auf, welche mit einer korrespondierenden Verzahnung an zumindest einem der auf der treibenden Welle bzw. Vorgelegewelle angeordneten, lose drehenden Zahnräder in Eingriff bringbar ist. Bei Schaltvorgängen kann es unter bestimmten Umständen dazu kommen, dass das Einlegen eines Ganges nicht bzw. nur mit hohen Schaltkräften möglich ist. Letzteres ist beispielsweise dann der Fall, wenn während des Vorgangs des Gangeinlegens die treibende Welle und die Vorgelegewelle nicht frei zueinander drehen können und die Schaltverzahnung des Schieberades und die korrespondierende Verzahnung an dem zu schaltenden Zahnrad in einer Schaltstellung Zahn vor Zahn stehen. Um in dieser Situation den Gang einlegen zu können, bedarf es der Erzeugung einer zusätzlichen Relativbewegung zwischen der Schaltverzahnung des Schieberades und der korrespondierenden Verzahnung des zu schaltenden Zahnrades, die durch eine Aktorik erzeugt wird. Die Erzeugung dieser Relativbewegung erfolgt hierzu durch die Betätigung einer mit einer der Wellen verbundenen Funktionseinheit, wie dem Lösen einer Bremse oder dem Drehen der treibenden Welle durch einen Antrieb.

Aus der DE 10 2016 124 920 A1 ist ein Antriebsstrang mit einer Schaltgetriebeanordnung bekannt, welche ein auf einer mit einem eine Führungsverzahnung aufweisenden Führungsabschnitt versehenen Welle axial verschieblich angeordnetes Schieberad aufweist. Das Schieberad ist mit einer Innenverzahnung ausgeführt, mittels der das Schieberad auf dem Führungsabschnitt axial verschieblich ist. Weiterhin weist das Schieberad zumindest eine an dem Schieberad angeordnete Schaltverzahnung auf, welche mit einer korrespondierenden Verzahnung an zumindest einem auf der Welle angeordneten, lose drehenden Schaltzahnrad in Eingriff bringbar ist. Zum in Eingriff bringen der zumindest einen Schaltverzahnung mit der korrespondierenden Verzahnung des zumindest einen Schaltzahnrades weist das Schieberad einen integrierten Verdrehausgleich auf. Nachteilig an dieser Schaltgetriebeanordnung ist, dass die Integration des Verdrehausgleichs in das Schieberad kostenintensiv ist. Dies ist insbesondere bei Schaltgetriebeanordnungen mit drei oder mehr Schaltstufen der Fall.

Der vorliegenden Erfindung liegt die Aufgabe zugrunde, einen Antriebsstrang sowie ein Fahrzeug mit einem Antriebsstrang der eingangs genannten Art weiterzuentwickeln, welche auf einfachere und kostengünstigere Weise eine Relativbewegung zwischen der Schaltmuffe und einem lose drehenden Zahnrad einer Schaltgetriebeanordnung ermöglichen.

Diese Aufgabe wird erfindungsgemäß durch einen Antriebsstrang mit den Merkmalen des Anspruches 1 gelöst. Vorteilhafte Weiterbildungen sind Gegenstand der Unteransprüche.

Gemäß dem Anspruch 1 wird ein Antriebsstrang, mit einem eine Motorabtriebswelle aufweisenden Antriebsmotor und einer eine Antriebswelle aufweisenden mehrgängigen Schaltgetriebeanordnung vorgeschlagen, wobei die Motorabtriebswelle und die Antriebswelle miteinander durch eine Vorrichtung zur Drehmomentübertragung verbunden sind, wobei die Vorrichtung als Kupplung mit einem integrierten Verdrehausgleich ausgebildet ist. Durch die als Kupplung mit Verdrehausgleich ausgeführte Vorrichtung zur Drehmomentübertragung wird ein Verdrehen von Losrädern gegenüber einer Schaltmuffe durch ein Verdrehen der Antriebswelle der Schaltgetriebeanordnung realisiert. Anstelle einer starren Profilbuchse zur Drehmomentübertragung wird die Kupplung zwischen die Motorabtriebswelle des Hydraulikmotors und die Antriebswelle montiert, wodurch ein Verdrehen der Antriebswelle des Schaltgetriebes gegenüber der Motorabtriebswelle des Hydraulikmotors ermöglicht wird. Der Verdrehausgleich ermöglicht in Umfangsrichtung von Motorabtriebswelle und Antriebswelle eine Ausgleichsbewegung, welche auf die Losräder der Zwischenwelle, auf welcher die Schaltmuffe axial verschieblich angeordnet ist, übertragen wird und zu einer Ausgleichsbewegung der Losräder relativ zu der axial auf der Zwischenwelle verschieblich angeordneten Schaltmuffe führt. Ein weiterer Vorteil gegenüber dem Stand der Technik gemäß der DE 1 085 042 A1 und der DE 10 2016 124 920 A1 besteht darin, dass insbesondere bei drei- oder mehrstufigen Schaltgetriebeanordnungen mit zwei oder mehr Schaltmuffen lediglich eine Kupplung mit Verdrehausgleich vorzusehen ist, während beim Stand der Technik gemäß der DE 10 2016 124 920 A1 jede einzelne Schaltmuffe mit einem Verdrehausgleich auszuführen ist.

Hierzu weist die Kupplung erfindungsgemäß einen Außenmitnehmer und zwei Innenmitnehmer auf, wobei zumindest ein Innenmitnehmer gegenüber dem Außenmitnehmer und/oder dem anderen Innenmitnehmer innerhalb eines Verdrehwinkelbereichs relativbeweglich ist, wobei der Außenmitnehmer und die Innenmitnehmer hohlzylindrisch ausgeführt sind, wobei der eine Innenmitnehmer ein freies Ende der Motorabtriebswelle und der andere Innenmitnehmer ein Ende der Antriebswelle aufnimmt.

Bevorzugt kann ein Verdrehen des zumindest einen Innenmitnehmers gegenüber dem Außenmitnehmer der Kupplung durch eine zurückgesetzte Mitnahmeverzahnung ermöglicht werden.

Insbesondere kann der Verdrehausgleich wenigstens ein Mittel zur Zentrierung des zumindest einen Innenmitnehmers relativ zum Außenmitnehmer und/oder dem anderen Innenmitnehmer umfassen. Hierdurch kann durch eine Ausgleichsbewegung zur Zentrierung des zumindest einen Innenmitnehmers relativ zum Außenmitnehmer und/oder dem anderen Innenmitnehmer erzeugt werden. Dies geschieht, wenn sich die Schaltgetriebeanordnung in einer Neutralstellung befindet, d.h., wenn die Schaltmuffe während eines Gangwechsels temporär mit keinem der Losräder in Eingriff steht. Die Ausgleichsbewegung führt zu einer Relativbewegung der Antriebswelle der Schaltgetriebeanordnung gegenüber der Motorabtriebswelle. Der Schaltvorgang lässt sich dabei ohne eine Bewegung des Fahrzeuges realisieren. Es ist dabei kein Andrehen der Antriebswelle der Schaltgetriebeanordnung und kein Lösen von Betriebs- oder Feststellbremse erforderlich.

Dabei kann das wenigstens eine Mittel zur Zentrierung als Federzentrierung ausgeführt sein.

Die Federzentrierung kann zumindest ein federbelastetes Zentrierelement umfassen, welches sich in einer Bohrung und einer Zentriernut abstützt.

Weiterhin kann die zumindest eine Federzentrierung bezogen auf die Längsachse der Kupplung als radiale oder axiale Federzentrierung ausgeführt sein.

Bevorzugt können der Außenmitnehmer und der zumindest eine Innenmitnehmer mit einer axialen Verzahnung versehen sein, wobei die Verzahnung des Außenmitnehmers zumindest mit der zumindest einen Verzahnung des Innenmitnehmers in Eingriff steht. Das Mittel zur Zentrierung ist dabei als radiale Federzentrierung ausgeführt. Der Verdrehwinkelbereich resultiert aus einem lichten Abstand zwischen Zahnflanken der Verzahnung.

Des Weiteren können die Innenmitnehmer mit einer axialen Verzahnung versehen sein, wobei ein Innenmitnehmer eine als Innenverzahnung ausgeführte Verzahnung aufweist, die mit einer als Außenverzahnung ausgeführten Verzahnung des anderen Innenmitnehmers in Eingriff steht. Das Mittel zur Zentrierung ist hierbei als radiale Federzentrierung ausgeführt.

Insbesondere kann die jeweilige Bohrung, in welcher sich das zumindest eine federbelastete Zentrierelement abstützt, in dem die Innenverzahnung aufweisenden Innenmitnehmer und die jeweilige Zentriernut auf dem die Außenverzahnung aufweisenden Innenmitnehmer angeordnet sein.

Gemäß einer alternativen Ausführungsform können die Innenmitnehmer an ihren einander gegenüberliegenden Stirnseiten eine als Klauenverzahnung ausgeführte Verzahnung aufweisen. Dabei kann jeder der beiden Innenmitnehmer mehrere Klauen aufweisen, welche in Umfangsrichtung äquidistant verteilt angeordnet sind. Das Mittel zur Zentrierung ist dabei als axiale Federzentrierung ausgeführt, d.h. die Bohrungen der Federzentrierung sind achsparallel zur Längsachse der Kupplung in einem der Innenmitnehmer angeordnet. Entsprechendes gilt für die Anordnung der federbelasteten Zentrierelemente in der jeweiligen Bohrung. Der Verdrehwinkelbereich resultiert aus einem lichten Abstand zwischen den Zahnflanken der Klauen der Klauenverzahnung.

Bevorzugt kann der hohlzylindrisch ausgeführte Außenmitnehmer zumindest einen sich radial nach innen erstreckenden Absatz aufweisen, an dem sich zumindest einer der Innenmitnehmer axial abstützt.

Insbesondere kann die Schaltgetriebeanordnung als mehrstufiges Stirnradgetriebe ausgebildet sein. Das mehrstufige Stirnradgetriebe kann wenigstens zwei Wellen aufweisen, eine Antriebswelle und eine Zwischenwelle, wobei auf der einen Welle lose drehende Zahnräder angeordnet sind, welche mit drehfest angeordneten Zahnrädern auf der anderen Welle in Eingriff stehen, sowie mit zumindest einer axial verschieblich angeordneten Schaltmuffe, welche mittels zumindest einer auf einer Seite der Schaltmuffe angeordneten Schaltverzahnung mit einer korrespondierenden Verzahnung an zumindest einem auf der Welle angeordneten, lose drehenden Zahnrad in Eingriff bringbar ist.

Dabei kann die Schaltgetriebeanordnung als Schieberadgetriebe, Klauenschaltgetriebe oder sequentielles Getriebe ausgeführt sein.

Weiterhin wird die eingangs gestellte Aufgabe durch ein Fahrzeug, insbesondere landwirtschaftliches oder kommunales Nutzfahrzeug, mit einem Antriebsstrang der nach einem der Ansprüche 1 bis 12 ausgebildet ist, gelöst. Bei dem Fahrzeug kann es sich insbesondere um eine selbstfahrende Erntemaschine handeln.

Die vorliegende Erfindung wird nachstehend anhand von in den Zeichnungen dargestellten Ausführungsbeispielen näher erläutert.

Es zeigen:
- Fig. 1: eine schematische Darstellung eines Antriebsstranges eines Fahrzeugs;
- Fig. 2A, 2B: schematisch eine Kupplung mit integriertem Verdrehausgleich ausgeführte Vorrichtung gemäß einer ersten Ausführungsform, wobei eine Ansicht ("A) eine perspektivische Darstellung der Kupplung und eine Ansicht (2B) eine Schnittansicht der Kupplung zeigen;
- Fig. 3A, 3B: schematisch eine als Kupplung mit integriertem Verdrehausgleich ausgeführte Vorrichtung gemäß einer zweiten Ausführungsform, wobei eine Ansicht (3A) eine Schnittansicht der Kupplung und eine Ansicht (3B) eine
- Fig. 4A, 4B: perspektivische Darstellung von Innenmitnehmern der Kupplung zeigen; schematisch eine als Kupplung mit integriertem Verdrehausgleich ausgeführte Vorrichtung gemäß einer weiteren Ausführungsform, wobei eine Ansicht (4A) eine Schnittansicht der Kupplung und eine Ansicht (4B) eine perspektivische Darstellung eines Innenmitnehmers der Kupplung zeigen;
- Fig. 5: schematisch eine Frontansicht einer als Kupplung mit integriertem Verdrehausgleich ausgeführten Vorrichtung gemäß einer weiteren Ausführungsform; und
- Fig. 6A, 6B, 6C: eine als Kupplung mit integriertem Verdrehausgleich ausgeführte Vorrichtung gemäß einer nicht erfindungsgemäßen Ausführungsform, wobei eine Ansicht (6A) eine perspektivische Darstellung der Kupplung, eine Ansicht (6B) eine perspektivische Darstellung eines Innenmitnehmers der Kupplung und eine Ansicht (6C) eine Schnittansicht der Kupplung zeigen.

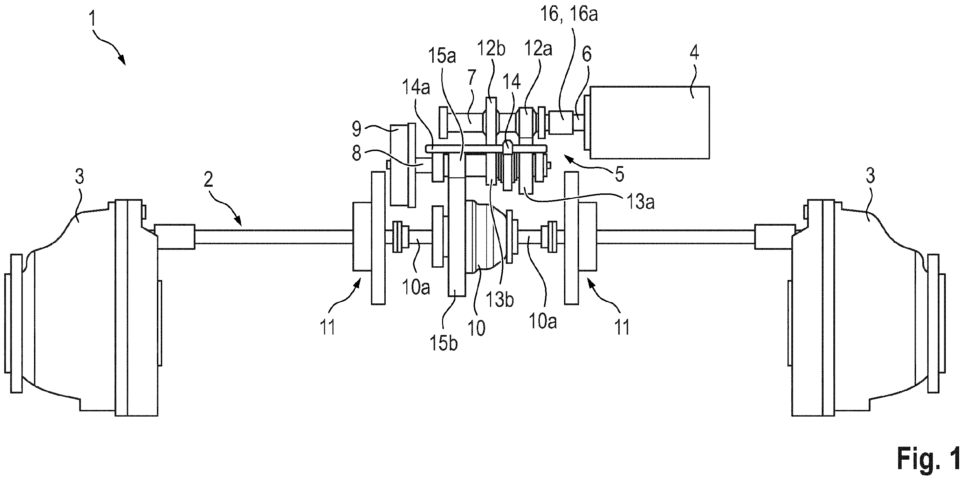

In Fig. 1 ist eine schematische Darstellung eines Antriebsstranges 1 für ein -nicht dargestelltes - Fahrzeug, insbesondere ein landwirtschaftliches oder kommunales Nutzfahrzeug, besonders bevorzugt eine selbstfahrende Erntemaschine, dargestellt. Der Antriebsstrang 1 des Fahrzeugs umfasst eine Antriebsachse 2, an deren Enden jeweils ein Achsgetriebe 3 angeordnet ist, einen als Hydraulikmotor 4 ausgebildeten Antriebsmotor sowie eine mehrstufige Schaltgetriebeanordnung 5. Der Hydraulikmotor 4 weist eine Motorabtriebswelle 6 auf, die mit einer Antriebswelle 7 der Schaltgetriebeanordnung 4 durch eine Vorrichtung 16 zur Drehmomentübertragung verbunden ist. Die Vorrichtung 16 ist als Kupplung 16a mit integriertem Verdrehausgleich 43 ausgeführt und im Antriebsstrang 1 zwischen der Motorabtriebswelle 6 und der Antriebswelle 7 der Schaltgetriebeanordnung 4 positioniert. Die Schaltgetriebeanordnung 5 umfasst eine Zwischenwelle 8, an der eine Parkbremse 9 des Fahrzeugs angeordnet ist. Die Antriebsachse 2 weist ein Differential 10 mit zwei Antriebswellen 10a auf, denen jeweils eine Betriebsbremse 11 zugeordnet ist.

Im dargestellten Ausführungsbeispiel ist die Schaltgetriebeanordnung 5 als ein 2-Gang-Stirnradgetriebe ausgeführt. Die erfindungsgemäße Lösung ist darüber hinaus auch für Schaltgetriebeanordnungen mit mehr als 2 Gängen verwendbar. Auf der Antriebswelle 7 sind ein Zahnrad 12a und ein Zahnrad 12b drehfest angeordnet. Auf der Zwischenwelle 8 sind ein Zahnrad 13a und ein Zahnrad 13b frei drehbar als Losräder angeordnet, die jeweils mit dem korrespondierenden Zahnrad 12a, 12b auf der Antriebswelle 7 kämmen. Zwischen den Zahnrädern 13a, 13b, die nachfolgend auch als Losräder 13a, 13b bezeichnet werden, ist eine durch eine Aktorik 14a betätigbare Schaltmuffe 14 axial verschieblich auf der Zwischenwelle 8 angeordnet. Weiterhin ist auf der Zwischenwelle 8 ein weiteres Zahnrad 15a drehfest angeordnet, welches mit einem auf der Antriebsachse 2 am Differential 10 drehfest angeordneten Zahnrad 15b kämmt.

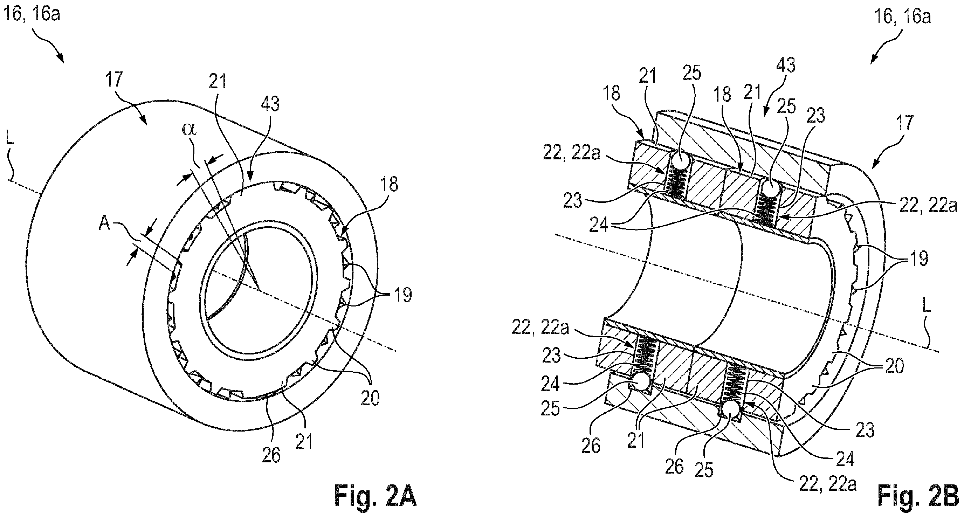

In den Fig. 2A und 2B ist schematisch die als Kupplung 16a mit integriertem Verdrehausgleich 43 ausgeführte Vorrichtung 16 gemäß einer ersten Ausführungsform dargestellt, wobei eine Ansicht (2A) eine perspektivische Darstellung der Kupplung 16a und eine Ansicht (2B) eine Schnittansicht zeigen. Die Kupplung 16a weist einen Außenmitnehmer 17 und zwei Innenmitnehmer 18 auf, die koaxial zur Längsachse L der Kupplung 16a angeordnet sind. Der Außenmitnehmer 17 und die Innenmitnehmer 18 sind hohlzylindrisch ausgeführt. Der Außenmitnehmer 17 umschließt die Innenmitnehmer 18 in Umfangsrichtung und erstreckt sich in axialer Richtung zumindest abschnittsweise über beide Innenmitnehmer 18. Der Außenmitnehmer 17 weist eine als Innenverzahnung 19 ausgeführte Verzahnung auf. Die Innenmitnehmer 18 weisen jeweils eine mit der Innenverzahnung 19 korrespondierende Außenverzahnung 20 auf. Die Innenmitnehmer 18 sind relativ zueinander und relativ zum Außenmitnehmer 17 in Umfangsrichtung beweglich. Gegenüber dem Außenmitnehmer 17 sind die Innenmitnehmer 18 innerhalb eines Verdrehwinkelbereichs α beweglich. Der Verdrehwinkelbereich α resultiert aus dem lichten Abstand A der einander zugewandten Zahnflanken von Innenverzahnung 19 und Außenverzahnung 20. Der eine Innenmitnehmer 18 nimmt ein freies Ende der Motorabtriebswelle 6 und der andere Innenmitnehmer 18 ein Ende der Antriebswelle 7 auf. Die Verbindung der Motorabtriebswelle 6 sowie der Antriebswelle 7 mit dem jeweiligen Innenmitnehmer 18 erfolgt in bekannter Weise kraft- und/oder formschlüssig.

Wie aus den Ansichten der Fig. 2A, 2B ersichtlich ist, weisen die Innenmitnehmer 18 jeweils zwei sockelförmige Zentrierabschnitte 21 auf. Die beiden Zentrierabschnitte 21 eines jeden Innenmitnehmers 18 sind in Umfangsrichtung um etwa 180° versetzt zueinander angeordnet und unterbrechen die Außenverzahnung 20. Jeder Zentrierabschnitt 21 weist ein Mittel 22 zur Zentrierung des jeweiligen Innenmitnehmers 18 relativ zum Außenmitnehmer 17 auf. Das Mittel 22 zur Zentrierung ist als radiale Federzentrierung 22a ausgeführt. Die Federzentrierung 22a umfasst zumindest ein durch eine Feder 24 federbelastetes Zentrierelement 25. Die Feder 24 und das Zentrierelement 25 stützen sich in einer Bohrung 23 und einer Zentriernut 26 ab. Die jeweiligen Bohrungen 23 sind in den Innenmitnehmern 18 angeordnet und verlaufen orthogonal zur Längsachse L der Kupplung 16a. Die Zentriernuten 26 sind dem jeweiligen Zentrierabschnitt 21 gegenüberliegend an dem Außenmitnehmer 17 angeordnet und unterbrechen die Innenverzahnung 19. Die Zentriernuten 26 weisen eine zumindest dem Bohrungsdurchmesser der Bohrung 23 entsprechende Erstreckung in axialer Richtung auf. In Umfangsrichtung des Außenmitnehmers 17 gesehen entspricht die Breite der jeweiligen Zentriernut 26 in etwa der Bereite des korrespondierenden Zentrierabschnitts 21. Die Zentriernuten 26 weisen einen sich in radialer Richtung des Außenmitnehmers 17 verjüngenden Verlauf auf, so dass sich ein im Wesentlichen trichterförmiger Querschnitt der Zentriernuten 26 ergibt. Das jeweilige Zentrierelement 25 weist einen kugelförmigen Endabschnitt auf, welcher in der Zentriernut 26 in radialer Richtung geführt ist.

Bei gleichzeitiger Betätigung der Betriebsbremsen 11 sowie dem Anliegen des vom Hydraulikmotor 4 bereitgestellten Speisedruckes, sind die Antriebswelle 7 und die Zwischenwelle 8 bzw. die darauf befindlichen Zahnräder 12a, 12b, 13a, 13b sowie die Schaltmuffe 14 nicht frei zueinander drehbar. Befinden sich eines der als Losrad ausgeführten Zahnräder 13a, 13b und die Schaltmuffe 14 beim Versuch des Gangeinlegens in einer Schaltstellung Zahn vor Zahn, lässt sich der entsprechende Gang nicht einlegen. In diesem Zustand müsste aktiv eine Relativbewegung zwischen der Schaltmuffe 14 und dem Losrad 13a oder 13b ermöglicht werden, z. B. durch ein Andrehen des Hydraulikmotors 4 oder ein Lösen der Betriebsbremsen 11 des Fahrzeugs. Durch die mit dem integrierten Verdrehausgleich 43 ausgebildete Kupplung 16a zwischen der Motorabtriebswelle 6 und der Antriebswelle 7 wird eine Relativbewegung zwischen der Schaltmuffe 14 und dem jeweiligen Losrad 13a, 13b des einzulegenden Ganges ermöglicht, ohne aktiv eine zusätzliche Funktionseinheit wie die Betriebsbremse 11 oder den Hydraulikmotor 4 betätigen zu müssen. Durch die zwischen der Motorabtriebswelle 6 des Hydraulikmotors 4 und der Antriebswelle 7 der Schaltgetriebeanordnung 5 montierte Kupplung 16a wird ein Verdrehen der Antriebswelle 7 gegenüber der Motorabtriebswelle 6 ermöglicht, wenn sich die Schaltgetriebeanordnung 5 in einer Neutralstellung befindet, d.h., wenn die Schaltmuffe 14 während eines Gangwechsels temporär mit keinem der als Losräder 13a, 13b ausgeführten dritten und vierten Zahnräder 13a, 13b in Eingriff steht. Dabei wird in der Neutralstellung durch das als radiale Federzentrierung 22a ausgeführte Mittel 22 zur Zentrierung eine Relativbewegung zwischen dem auf der Antriebswelle 7 angeordneten Innenmitnehmer 18 und dem Außenmitnehmer 17 erzeugt. Der Schaltvorgang lässt sich somit ohne Bewegung des Fahrzeuges realisieren.

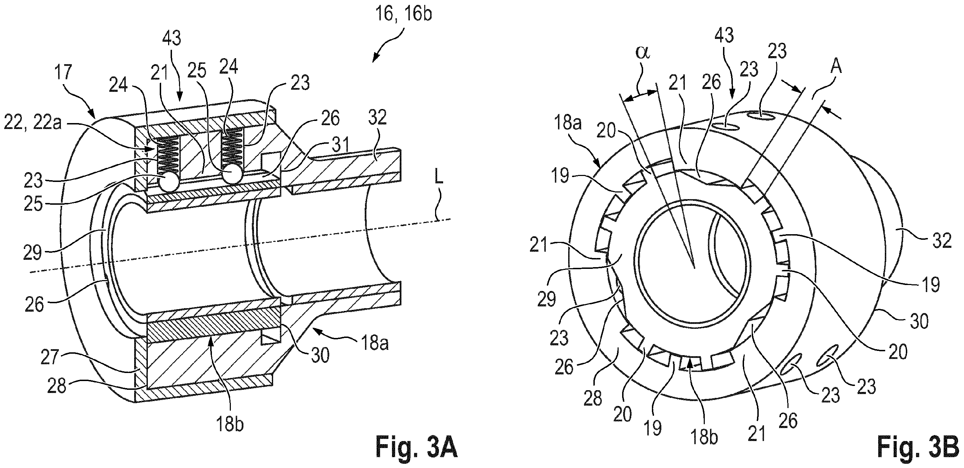

Fig. 3A und 3B zeigen schematisch eine als Kupplung 16b mit integriertem Verdrehausgleich 43 ausgeführte Vorrichtung 16 gemäß einer zweiten Ausführungsform, wobei eine Ansicht (3A) eine Schnittansicht der Kupplung 16b und eine Ansicht (3B) eine perspektivische Darstellung von zwei Innenmitnehmern 18a, 18b der Kupplung 16b zeigen. Für bau- und/oder funktionsgleiche Komponenten der Vorrichtung 16 gemäß der zweiten Ausführungsform werden die bereits verwendeten Bezugszeichen beibehalten.

Die Kupplung 16b weist einen Außenmitnehmer 17 sowie zwei Innenmitnehmer 18a, 18b auf, die koaxial zur Längsachse L der Kupplung 16b angeordnet sind. Die Kupplung 16b unterscheidet sich von der weiter oben beschriebenen ersten Ausführungsform unter anderem dadurch, dass der Außenmitnehmer 17 keine Kräfte auf einen der Innenmitnehmer 18a, 18b überträgt. Dem Außenmitnehmer 17 kommt bei dieser Ausführungsform lediglich die Aufgabe zu, die beiden Innenmitnehmer 18a, 18b in sich abschnittsweise aufzunehmen und zumindest einseitig in axialer Richtung abzustützen. Wie aus Ansicht (B) der Fig. 3 ersichtlich, ist der Innenmitnehmer 18b gegenüber dem Innenmitnehmer 18a in Umfangsrichtung innerhalb des Verdrehwinkelbereichs α relativbeweglich. Der Außenmitnehmer 17 kann bei der Montage der Kupplung 16b auf den Innenmitnehmer 18a aufgeschoben werden, nachdem die Federzentrierung 22a montiert wurde.

Der hohlzylindrische Außenmitnehmer 17 weist einen sich abschnittsweise in radialer Richtung erstreckenden Wandabschnitt 27 auf. Die radiale Erstreckung des Wandabschnitts 27 ist derart gewählt, dass die Innenmitnehmer 18a, 18b mit ihren jeweiligen radialen Stirnflächen 28, 29 in montierter Position zumindest abschnittsweise an der innenseitigen Fläche des Wandabschnitt 27 anliegen bzw. sich daran abstützen.

Der Innenmitnehmer 18a nimmt den Innenmitnehmer 18b über dessen axiale Erstreckung auf und umschließt diesen. Der Innenmitnehmer 18b stützt sich mit seiner axialen Stirnfläche 30 an einem umlaufenden, radialen Absatz 31 des Innenmitnehmers 18a ab. Ein sich in axialer Richtung erstreckender Schaftabschnitt 32 dient der Aufnahme des freien Endes der Motorabtriebswelle 6.

Ein weiterer Unterschied dieser zweiten Ausführungsform der Kupplung 16b besteht darin, dass der den Innenmitnehmer 18b umschließende Innenmitnehmer 18a eine Innenverzahnung 19 aufweist, die mit einer Außenverzahnung 20 des Innenmitnehmers 18b in Eingriff steht. Der Verdrehwinkelbereich α resultiert aus dem lichten Abstand A der einander zugewandten Zahnflanken der Innenverzahnung 19 des Innenmitnehmers 18a und der Außenverzahnung 20 des zum Innenmitnehmers 18a relativbeweglich angeordneten Innenmitnehmers 18b. Die Innenverzahnung 19 des Innenmitnehmers 18a ist durch zumindest zwei, im dargestellten Ausführungsbeispiel drei, unter einem Winkel zueinander versetzt angeordnete Zentrierabschnitte 21 unterbrochen. Die Außenverzahnung 20 des Innenmitnehmers 18b ist durch zumindest zwei, im dargestellten Ausführungsbeispiel drei, unter einem Winkel zueinander versetzt angeordnete Zentriernuten 26 unterbrochen. Orthogonal zur Längsachse L ist jeweils mindestens eine Bohrung 23 in dem jeweiligen Zentrierabschnitt 21 des Innenmitnehmers 18a angeordnet, in welchen das jeweilige Mittel 22 zur Zentrierung, welches ebenfalls als radiale Federzentrierung 22a ausgeführt ist, angeordnet. Die Federzentrierung 22a umfasst zumindest ein durch eine Feder 24 federbelastetes Zentrierelement 25. Die Feder 24 und das durch die Feder 24 belastete Zentrierelement 25 stützen sich in der Bohrung 23 und der korrespondierend zu dem jeweiligen Zentrierabschnitt 21 angeordneten Zentriernut 26 ab. Der Aufbau und die Form des jeweiligen Zentrierabschnitts 21 und der zugehörigen Zentriernut 26 entspricht dabei im Wesentlichen der gemäß der ersten Ausführungsform. Im Gegensatz zu der weiter oben beschriebenen ersten Ausführungsform übernimmt jedoch der Innenmitnehmer 18a die Funktion der Drehmomentübertragung anstelle des Außenmitnehmers 17.

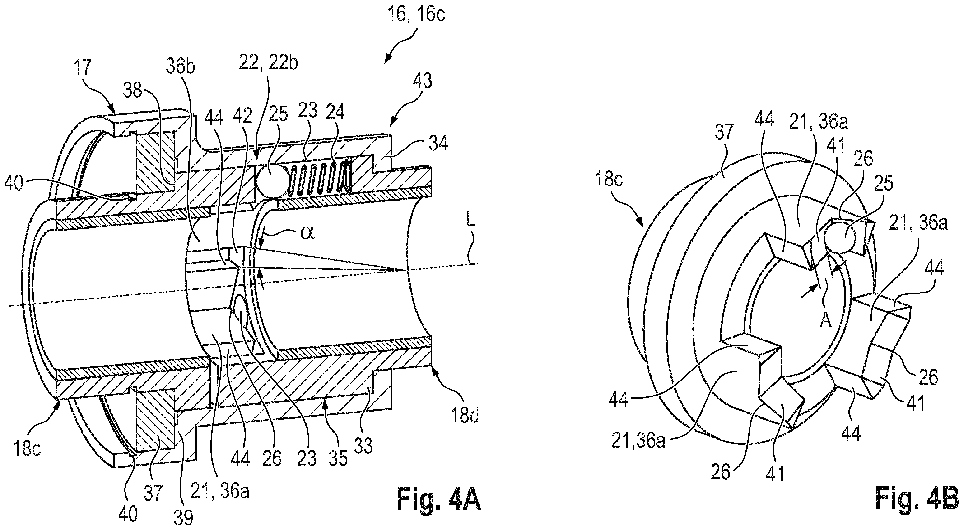

Die Darstellung in Fig. 4A und 4B zeigt schematisch eine als Kupplung 16c mit integriertem Verdrehausgleich 43 ausgeführte Vorrichtung 16 gemäß einer weiteren Ausführungsform, wobei eine Ansicht (4A) eine Schnittansicht der Kupplung 16c und eine Ansicht (4B) eine perspektivische Darstellung eines Innenmitnehmers der Kupplung 16c zeigen.

Die Kupplung 16c weist einen Außenmitnehmer 17 auf, welcher zwei Innenmitnehmer 18c, 18d in Umfangsrichtung umschließt. Der Innenmitnehmer 18d stützt sich mit einem flanschförmigen Endabschnitt 33 an einem umlaufenden, radialen Absatz 34 des Außenmitnehmers 17 ab. Dem Außenmitnehmer 17 kommt auch bei dieser Ausführungsform lediglich die Aufgabe zu, die beiden Innenmitnehmer 18c, 18d in sich abschnittsweise aufzunehmen und einseitig in axialer Richtung abzustützen. Der Innenmitnehmer 18c ist gegenüber dem Innenmitnehmer 18d in Umfangsrichtung relativbeweglich angeordnet. Zur Kraftübertragung weisen der Innenmitnehmer 18c und der Innenmitnehmer 18d an ihren einander zugewandten Stirnseiten eine als Klauenverzahnung 35 ausgeführte Verzahnung auf. Jeder der beiden Innenmitnehmer 18c, 18d weist mehrere Klauen 36a, 36b auf, welche in Umfangsrichtung äquidistant verteilt angeordnet sind.

Um den relativbeweglichen Innenmitnehmer 18c gegen ein axiales Verschieben zu sichern, wird der Innenmitnehmer 18c mittels eines ringförmigen Elementes 37 fixiert, an welchem sich der Innenmitnehmer 18c mit seiner radialen Stirnfläche 38 abstützt. Das ringförmige Element 37 liegt an einem weiteren radialen Absatz 39 des Außenmitnehmers 17 an. Zur Befestigung des ringförmigen Elementes 37 können Nuten 40 in der Außenmantelfläche des Innenmitnehmers 18c und der Innenmantelfläche des Außenmitnehmers 17 vorgesehen sein, in die jeweils ein Wellensicherungsring einbringbar ist, um das Element 37 axial festzulegen. Das ringförmige Element 37 kann insbesondere als Lager ausgeführt sein.

Die jeweilige Klaue 36a des Innenmitnehmers 18c bildet einen Zentrierabschnitt 21, der ein Mittel 22 zur Zentrierung des relativbeweglichen Innenmitnehmers 18c relativ zum Innenmitnehmer 18d aufweist. Das Mittel 22 zur Zentrierung ist dabei als axiale Federzentrierung 22b ausgeführt. Die Federzentrierung 22b umfasst zumindest ein durch eine Feder 24 federbelastetes Zentrierelement 25, welche sich in einer Bohrung 23 und einer Zentriernut 26 abstützen. Vorzugsweise sind eine der Anzahl an Zentriernuten 26 entsprechende Anzahl an durch eine Feder 24 federbelastete Zentrierelemente 25 vorgesehen. Die Zentriernuten 26 sind an einer jeweiligen radialen Stirnfläche 41 des relativbeweglichen Innenmitnehmers 18c ausgebildet. Die Bohrungen 23 sind bei der axialen Federzentrierung 22b achsparallel zur Längsachse L in Abschnitten 42 zwischen freien Abschnitten der Klauen 36b des Innenmitnehmers 18d angeordnet, in welche die korrespondierenden Klauen 36a des Innenmitnehmers 18c eingreifen. Die Feder 24 stützt sich mit einem Ende in der Bohrung 23 ab und presst das Zentrierelement 25 gegen die Oberfläche der Zentriernut 26 der Klaue 36a des relativbeweglichen Innenmitnehmers 18c, die sich mit dem Abschnitt 42 zwischen den Klauen 36b des Innenmitnehmers 18d in Eingriff befindet. Durch die spielbehaftete Ausführung der Klauen 36a, 36b kann sich eine Relativbewegung innerhalb des Verdrehwinkelbereichs α zwischen dem Innenmitnehmer 18c und dem Innenmitnehmer 18d einstellen. Der Verdrehwinkelbereich α ergibt sich aus dem aus dem Abstand A der der Flanke der Zentriernut 26 zugewandten Fläche des Zentrierelements 25.

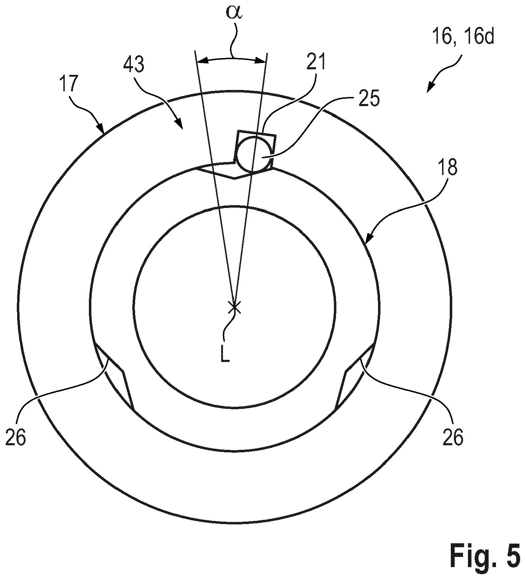

In Fig. 5 ist rein schematisch eine Frontansicht einer als Kupplung 16d mit integriertem Verdrehausgleich 43 ausgeführten Vorrichtung 16 gemäß einer weiteren Ausführungsform dargestellt. Diese Ausführungsform entspricht im Aufbau im Wesentlichen dem in Fig. 2 dargestellten Aufbau der Kupplung 16a. Im Unterschied zu der in Fig. 2 dargestellten Kupplung 16a wird auf eine Verzahnung zwischen dem Außenmitnehmer 17 und den Innenmitnehmern 18 verzichtet. Das als radiale Federzentrierung 22a ausgeführte Mittel 22 zur Zentrierung dient zugleich der Drehmomentübertragung zwischen dem Außenmitnehmer 17 und den beiden darin angeordneten Innenmitnehmern 18. Der Verdrehwinkelbereich α ergibt sich aus dem Abstand der einander zugewandter Flanken 44 der jeweiligen ineinandergreifenden Klauen 36a, 36b zueinander.

Allen vorstehenden Ausführungsformen ist gemeinsam, dass der Verdrehausgleich 43 wenigstens ein Mittel 22 zur Zentrierung des zumindest einen Innenmitnehmers 18, 18b, 18c relativ zum Außenmitnehmer 17 und/oder dem anderen Innenmitnehmer 18a, 18d umfasst. Weiterhin ist allen vorstehenden Ausführungsformen gemeinsam, dass die Relativbewegung durch den Verdrehwinkelbereich α begrenzt ist, so dass es mit dem Erreichen des Endes des Verdrehwinkelbereich α zu einer Kraftübertragung zwischen der Motorabtriebswelle 6 und der Antriebswelle 7 durch die Vorrichtung 16 kommt. Ein Gangwechsel führt dazu, dass sich die Schaltmuffe 14 während der Schaltphase in einer Neutralstellung befindet. Dies ermöglicht es, dass durch das Zentriermittel 22 ein Verdrehen der Antriebswelle 7 realisiert wird, was zu einem Verdrehen der Losräder 13a, 13b gegenüber der Schaltmuffe 14 führt. Die eingeschränkte Relativbewegung zwischen der Schaltmuffe 14 und den Losrädern 13a, 13b erfolgt ohne die Betätigung einer Zusatzfunktion, d.h. sowohl die Betriebsbremsen 11 des Fahrzeuges als auch der Speisedruck des Hydraulikmotors 4 müssen nicht gelöst bzw. drucklos geschaltet werden, um eine Schaltstellung Zahn vor Zahn zwischen der Schaltmuffe 14 und dem jeweiligen Losrad 13a, 13b zu verhindern, wodurch das Einlegen eines Ganges verhindert würde.

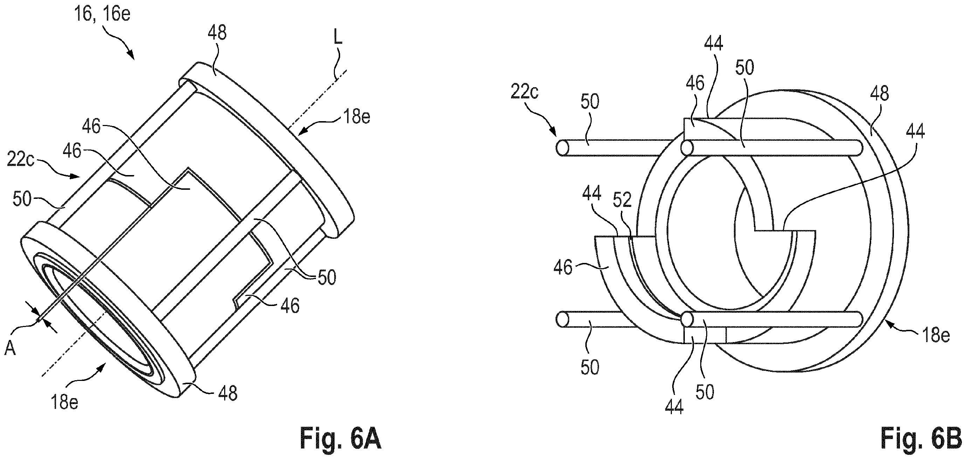

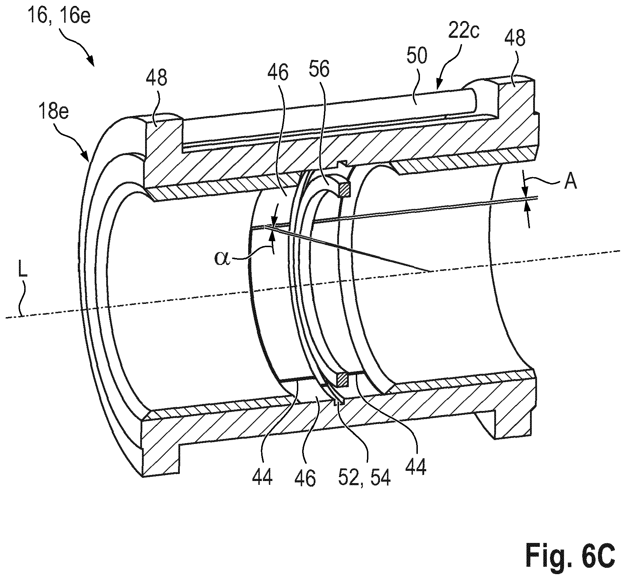

Die Darstellungen in den Fig. 6A, 6B, 6C zeigen eine als Kupplung 16e mit integriertem Verdrehausgleich ausgeführte Vorrichtung 16 gemäß einer nicht erfindungsgemäßen Ausführungsform, wobei eine Ansicht (6A) eine perspektivische Darstellung der Kupplung 16e, eine Ansicht (6B) eine perspektivische Darstellung eines Innenmitnehmers 18e der Kupplung 16e und eine Ansicht (6C) eine Schnittansicht der Kupplung 16e zeigen. Die Kupplung 16e umfasst zwei Innenmitnehmer 18e, die baugleich ausgeführt sind. Die Innenmitnehmer 18e weisen jeweils Klauen 46 auf, die ineinandergreifen. Ein zwischen benachbarten Klauen 46 bestehender lichter Abstand A ermöglicht ein Verdrehen der beiden Innenmitnehmer 18e relativ zueinander. Jeder Innenmitnehmer 18e weist einen flanschförmigen Endabschnitt 48 auf. Zwischen den einander gegenüberliegenden Endabschnitten 48 sind auf der Außenmantelfläche der Innenmitnehmer 18e als axiale Federzentrierung 22c ausgeführte Federdrähte 50 angeordnet. Die Federdrähte 50 verlaufen koaxial zur Längsachse der Kupplung 16e.

Die Federdrähte 50 können nur an den Endabschnitten 48 des jeweiligen Innenmitnehmers 18e oder zusätzlich auch entlang der Außenmantelfläche der Innenmitnehmer 18e befestigt sein. Die Federdrähte 50 sind in Umfangsrichtung der Kupplung 16e bevorzugt äquidistant zueinander angeordnet. Jede Klaue 46 weist an ihrer Innenmantelfläche einen in Umfangsrichtung verlaufenden Nutabschnitt 52 auf.

Die Ansicht der Fig. 6C zeigt eine Schnittansicht der Kupplung 16e. Die ineinander gesteckten Klauen 46 bilden mit ihren an der Innenmantelfläche angeordneten Nutabschnitten 52 eine in Umfangsrichtung durchgehende radiale Nut 54 aus. In der Nut 54 ist ein Sicherungsring 56 angeordnet, der eine axial gerichtete Bewegung der Innenmitnehmer 18e verhindert. Der in der Nut 54 angeordnete Sicherungsring 56 ermöglicht den beiden Innenmitnehmern 18e eine Relativbewegung zueinander in Umfangsrichtung. Die Größenordnung der Relativbewegung respektive der Ausgleichsbewegung wird durch den lichten Abstand A zwischen den benachbarten Klauen 46 vorgegeben. Die Federdrähte 50 erfahren dabei eine Auslenkung und werden gespannt. Die in den Federdrähten gespeicherte Federkraft dient der Rückführung, d.h. Zentrierung der Innenmitnehmer 18e.

### Bezugszeichenliste

| | | | |
|---|---|---|---|
| 1 | Antriebsstrang | 25 | Zentrierelement |
| 2 | Antriebsachse | 26 | Zentriernut |
| 3 | Achsgetriebe | 27 | Wandabschnitt |
| 4 | Hydraulikmotor | 28 | Stirnfläche |
| 5 | Schaltgetriebeanordnung | 29 | Stirnfläche |
| 6 | Motorabtriebswelle | 30 | Stirnfläche |
| 7 | Antriebswelle | 31 | Radialer Absatz |
| 8 | Zwischenwelle | 32 | Schaftabschnitt |
| 9 | Parkbremse | 33 | Endabschnitt |
| 10 | Differential | 34 | Radialer Absatz |
| 11 | Betriebsbremse | 35 | Klauenverzahnung |
| 12a,12b | Zahnrad | 36a,36b | Klaue |
| 13a,13b | Zahnrad | 37 | Ringförmiges Element |
| 14 | Schaltmuffe | 38 | Stirnfläche |
| 15a,15b | Zahnrad | 39 | Radialer Absatz |
| 16 | Vorrichtung | 40 | Nut |
| 16a,16b | Kupplung | 41 | Stirnfläche |
| 16c,16d,16e | Kupplung | 42 | Abschnitt |
| 17 | Außenmitnehmer | 43 | Verdrehausgleich |
| 18 | Innenmitnehmer | 44 | Zahnflanke |
| 18a,18b | Innenmitnehmer | 46 | Klaue |
| 18c,18d,18e | Innenmitnehmer | 48 | Endabschnitt |
| 19 | Innenverzahnung | 50 | Federdraht |
| 20 | Außenverzahnung | 52 | Nutabschnitt |
| 21 | Zentrierabschnitt | 54 | Nut |
| 22 | Mittel zur Zentrierung | 56 | Sicherungsring |
| 22a | Radiale Federzentrierung | α | Verdrehwinkelbereich |
| 22b,22c | Axiale Federzentrierung | A | Abstand |
| 23 | Bohrung | L | Längsachse |
| 24 | Feder | | |

## Patentansprüche

1. Antriebsstrang (1), mit einem eine Motorabtriebswelle (6) aufweisenden Antriebsmotor (4) und einer eine Antriebswelle (7) aufweisenden mehrgängigen Schaltgetriebeanordnung (5), wobei die Motorabtriebswelle (6) und die Antriebswelle (7) miteinander durch eine Vorrichtung (16) zur Drehmomentübertragung verbunden sind, die als Kupplung (16a, 16b, 16c, 16d, 16e) mit einem integrierten Verdrehausgleich (43) ausgebildet ist, **dadurch gekennzeichnet, dass** die Kupplung (16a, 16b, 16c, 16d) einen Außenmitnehmer (17) und zwei Innenmitnehmer (18, 18a, 18b, 18c, 18d, 18e) aufweist, wobei zumindest ein Innenmitnehmer (18, 18b, 18c, 18e) gegenüber dem Außenmitnehmer (17) und/oder dem anderen Innenmitnehmer (18, 18a, 18d, 18e) innerhalb eines Verdrehwinkelbereichs (α) relativbeweglich ist, wobei der Außenmitnehmer (17) und die Innenmitnehmer (18) hohlzylindrisch ausgeführt sind, wobei der eine Innenmitnehmer (18) ein freies Ende der Motorabtriebswelle (6) und der andere Innenmitnehmer (18) ein Ende der Antriebswelle (7) aufnimmt.

2. Antriebsstrang (1) nach Anspruch 1, **dadurch gekennzeichnet, dass** der Verdrehausgleich (43) wenigstens ein Mittel (22) zur Zentrierung des zumindest einen Innenmitnehmers (18, 18b, 18c, 18e) relativ zum Außenmitnehmer (17) und/oder dem anderen Innenmitnehmer (18a, 18d, 18e) umfasst.

3. Antriebsstrang (1) nach Anspruch 2, **dadurch gekennzeichnet, dass** das wenigstens eine Mittel (22) zur Zentrierung als Federzentrierung (22a, 22b, 22c) ausgeführt ist.

4. Antriebsstrang (1) nach Anspruch 3, **dadurch gekennzeichnet, dass** die Federzentrierung (22a, 22b) zumindest ein federbelastetes Zentrierelement (25) umfasst, welches sich in einer Bohrung (23) und einer Zentriernut (26) abstützt.

5. Antriebsstrang (1) nach einem der Ansprüche 3 oder 4, **dadurch gekennzeichnet, dass** die zumindest eine Federzentrierung (22a, 22b, 22c) bezogen auf die Längsachse (L) der Kupplung (16a, 16b, 16c, 16d, 16e) als radiale Federzentrierung (22a) oder axiale Federzentrierung (22b, 22c) ausgeführt ist.

6. Antriebsstrang (1) nach einem der vorhergehenden Ansprüche, **dadurch gekennzeichnet, dass** der Außenmitnehmer (17) und der zumindest eine Innenmitnehmer (18, 18d) mit einer axialen Verzahnung (19, 20) versehen sind, wobei die Verzahnung (19) des Außenmitnehmers (17) zumindest mit der zumindest einen Verzahnung (20) des Innenmitnehmers (18, 18d) in Eingriff steht.

7. Antriebsstrang (1) nach einem der Ansprüche 1 bis 6, **dadurch gekennzeichnet, dass** die Innenmitnehmer (18a, 18b) mit einer axialen Verzahnung (19, 20) versehen sind, wobei ein Innenmitnehmer (18a) eine als Innenverzahnung (19) ausgeführte Verzahnung aufweist, die mit einer als Außenverzahnung (20) ausgeführten Verzahnung des anderen Innenmitnehmers (18b) in Eingriff steht.

8. Antriebsstrang (1) nach Anspruch 7, **dadurch gekennzeichnet, dass** die jeweilige Bohrung (23), in welcher sich das zumindest eine federbelastete Zentrierelement (25) abstützt, in dem die Innenverzahnung (19) aufweisenden Innenmitnehmer (18a) und die jeweilige Zentriernut (26) auf dem die Außenverzahnung (20) aufweisenden Innenmitnehmer (18b) angeordnet ist.

9. Antriebsstrang (1) nach einem der Ansprüche 1 bis 5, **dadurch gekennzeichnet, dass** die Innenmitnehmer (18c, 18d, 18e) an ihren einander gegenüberliegenden Stirnseiten eine als Klauenverzahnung (35) ausgeführte Verzahnung aufweisen.

10. Antriebsstrang (1) nach einem der vorhergehenden Ansprüche, **dadurch gekennzeichnet, dass** der Außenmitnehmer (19) hohlzylindrisch ausgeführt ist und zumindest einen sich radial nach innen erstreckenden Absatz (27, 34, 39) aufweist, an dem sich zumindest einer der Innenmitnehmer (18a, 18b, 18c. 18d) axial abstützt.

11. Antriebsstrang (1) nach einem der vorhergehenden Ansprüche, **dadurch gekennzeichnet, dass** die Schaltgetriebeanordnung (5) als mehrstufiges Stirnradgetriebe ausgebildet ist.

12. Antriebsstrang (1) nach einem der vorhergehenden Ansprüche, **dadurch gekennzeichnet, dass** die Schaltgetriebeanordnung (5) als Schieberadgetriebe, Klauenschaltgetriebe oder sequentielles Getriebe ausgeführt ist.

13. Fahrzeug, insbesondere landwirtschaftliches oder kommunales Nutzfahrzeug, mit einem Antriebsstrang (1), der nach einem der vorhergehenden Ansprüche ausgebildet ist.

## Claims

1. Drive train (1), with a drive motor (4) having a motor output shaft (6) and a multi-speed gearbox arrangement (5) having a drive shaft (7), wherein the motor output shaft (6) and the drive shaft (7) are connected to one another by a device (16) for torque transmission, which is designed as a clutch (16a, 16b, 16c, 16d, 16e) with an integrated torsional compensation (43), **characterised in that** the clutch (16a, 16b, 16c, 16d) has an outer carrier (17) and two inner carriers (18, 18a, 18b, 18c, 18d, 18e), wherein at least one inner carrier (18, 18b, 18c, 18e) is relatively movable with respect to the outer carrier (17) and/or the other inner carrier (18, 18a, 18d, 18e) within a torsion angle range (α), wherein the outer carrier (17) and the inner carriers (18) are of hollow cylindrical design, wherein one inner carrier (18) receives a free end of the motor output shaft (6) and the other inner carrier (18) receives an end of the drive shaft (7).

2. Drive train (1) according to claim 1, **characterised in that** the torsional compensation (43) comprises at least one means (22) for centring the at least one inner carrier (18, 18b, 18c, 18e) relative to the outer carrier (17) and/or the other inner carrier (18a, 18d, 18e).

3. Drive train (1) according to claim 2, **characterised in that** the at least one means (22) for centring is designed as a spring centring device (22a, 22b, 22c).

4. Drive train (1) according to claim 3, **characterised in that** the spring centring (22a, 22b) comprises at least one spring-loaded centring element (25) which is supported in a bore (23) and a centring groove (26).

5. Drive train (1) according to one of claims 3 or 4, **characterised in that** the at least one spring centring device (22a, 22b, 22c) is designed as a radial spring centring device (22a) or axial spring centring device (22b, 22c) in relation to the longitudinal axis (L) of the clutch (16a, 16b, 16c, 16d, 16e).

6. Drive train (1) according to one of the preceding claims, **characterised in that** the outer carrier (17) and the at least one inner carrier (18, 18d) are provided with an axial toothing (19, 20), wherein the toothing (19) of the outer carrier (17) engages at least with the at least one toothing (20) of the inner carrier (18, 18d).

7. Drive train (1) according to one of claims 1 to 6, **characterised in that** the inner carriers (18a, 18b) are provided with axial toothing (19, 20), one inner carrier (18a) having toothing designed as internal toothing (19), which is in engagement with toothing designed as external toothing (20) of the other inner carrier (18b).

8. Drive train (1) according to claim 7, **characterised in that** the respective bore (23), in which the at least one spring-loaded centring element (25) is supported, is arranged in the inner carrier (18a) having the internal toothing (19) and the respective centring groove (26) is arranged on the inner carrier (18b) having the external toothing (20).

9. Drive train (1) according to one of claims 1 to 5, **characterised in that** the inner carriers (18c, 18d, 18e) have a toothing designed as claw toothing (35) on their opposite end faces.

10. Drive train (1) according to one of the preceding claims, **characterised in that** the outer carrier (19) is of hollow cylindrical design and has at least one shoulder (27, 34, 39) extending radially inwards, on which at least one of the inner carriers (18a, 18b, 18c, 18d) is axially supported.

11. Drive train (1) according to one of the preceding claims, **characterised in that** the gearbox arrangement (5) is designed as a multi-stage spur gearbox.

12. Drive train (1) according to one of the preceding claims, **characterised in that** the gearbox arrangement (5) is designed as a sliding-wheel gearbox, claw-type gearbox or sequential gearbox.

13. Vehicle, in particular agricultural or municipal utility vehicle, having a drive train (1) which is designed according to one of the preceding claims.

## Revendications

1. Chaîne de transmission (1), comprenant un moteur d'entraînement (4) comportant un arbre de sortie de moteur (6) et comprenant un agencement de transmission à plusieurs vitesses (5) comportant un arbre d'entraînement (7), l'arbre de sortie de moteur (6) et l'arbre d'entraînement (7) étant reliés l'un à l'autre par l'intermédiaire d'un dispositif (16) de transmission de couple qui est conformé en embrayage (16a, 16b, 16c, 16d, 16e) avec une compensation de torsion intégrée (43), **caractérisée en ce que** l'embrayage (16a, 16b, 16c, 16d) comporte un entraîneur extérieur (17) et deux entraîneurs intérieurs (18, 18a, 18b, 18c, 18d, 18e), au moins un entraîneur intérieur (18, 18b, 18c, 18e) étant à déplacement relatif à l'intérieur d'une plage angulaire de torsion (a) par rapport à l'entraîneur extérieur (17) et/ou à l'autre entraîneur intérieur (18, 18a, 18d, 18e), l'entraîneur extérieur (17) et les entraîneurs intérieurs (18) étant conformés en cylindres creux, l'un (18) des entraîneurs intérieurs (18) recevant une extrémité libre de l'arbre de sortie de moteur (6) et l'autre entraîneur intérieur (18) recevant une extrémité de l'arbre d'entraînement (7).

2. Chaîne de transmission (1) selon la revendication 1, **caractérisée en ce que** la compensation de torsion (43) inclut au moins un moyen (22) pour le centrage du au moins un entraîneur intérieur (18, 18b, 18c, 18e) par rapport à l'entraîneur extérieur (17) et/ou à l'autre entraîneur intérieur (18a, 18d, 18e).

3. Chaîne de transmission (1) selon la revendication 2, **caractérisée en ce que** le au moins un moyen (22) pour le centrage est conformé en centrage à ressort (22a, 22b, 22c).

4. Chaîne de transmission (1) selon la revendication 3, **caractérisée en ce que** le centrage à ressort (22a, 22b) inclut au moins un élément de centrage sollicité par ressort (25) qui prend appui dans un perçage (23) et dans une rainure de centrage (26) .

5. Chaîne de transmission (1) selon une des revendications 3 ou 4, **caractérisée en ce que**, par rapport à l'axe longitudinal (L) de l'embrayage (16a, 16b, 16c, 16d, 16e), le au moins un centrage à ressort (22a, 22b, 22c) est conformé en centrage à ressort radial (22a) ou en centrage à ressort axial (22b, 22c).

6. Chaîne de transmission (1) selon une des revendications précédentes, **caractérisée en ce que** l'entraîneur extérieur (17) et le au moins un entraîneur intérieur (18, 18d) sont pourvus d'une denture axiale (19, 20), la denture (19) de l'entraîneur extérieur (17) étant en prise au moins avec la au moins une denture (20) de l'entraîneur intérieur (18, 18d).

7. Chaîne de transmission (1) selon une des revendications 1 à 6, **caractérisée en ce que** les entraîneurs intérieurs (18a, 18b) sont pourvus d'une denture axiale (19, 20), un entraîneur intérieur (18a) comportant une denture conformée en denture intérieure (19), laquelle est en prise avec une denture de l'autre entraîneur intérieur (18b) conformée en denture extérieure (20).

8. Chaîne de transmission (1) selon la revendication 7, **caractérisée en ce que** le perçage respectif (23) dans lequel prend appui le au moins un élément de centrage sollicité par ressort (25) est disposé dans l'entraîneur intérieur (18a) comportant la denture intérieure (19) et la rainure de centrage respective (26) est disposée sur l'entraîneur intérieur (18b) comportant la denture extérieure (20).

9. Chaîne de transmission (1) selon une des revendications 1 à 5, **caractérisée en ce que** les entraîneurs intérieurs (18c, 18d, 18e) comportent, sur leurs côtés frontaux opposés l'un à l'autre, une denture conformée en denture à crabots (35).

10. Chaîne de transmission (1) selon une des revendications précédentes, **caractérisée en ce que** l'entraîneur extérieur (19) est conformé en cylindre creux et comporte au moins un talon (27, 34, 39) s'étendant radialement vers l'intérieur, sur lequel au moins un des entraîneurs intérieurs (18a, 18b, 18c, 18d) prend appui axialement.

11. Chaîne de transmission (1) selon une des revendications précédentes, **caractérisée en ce que** l'agencement de transmission (5) est conformé en transmission à roues droites à plusieurs vitesses.

12. Chaîne de transmission (1) selon une des revendications précédentes, **caractérisée en ce que** l'agencement de transmission (5) est conformé en transmission à pignons baladeurs, en transmission à crabots ou en transmission séquentielle.

13. Véhicule, en particulier véhicule utilitaire agricole ou communal, comprenant une chaîne de transmission (1) qui est conformée selon une des revendications précédentes.
